**Europäisches Patentamt**

**European Patent Office**

**Office européen des brevets**

(11) Numéro de publication : **0 299 824 B1**

(12)

# FASCICULE DE BREVET EUROPEEN

(45) Date de publication du fascicule du brevet :
25.09.91 Bulletin 91/39

(21) Numéro de dépôt : **88401631.2**

(22) Date de dépôt : **27.06.88**

(51) Int. Cl.⁵ : **D01F 2/00, C08B 1/00, C08L 1/02**

(54) **Procédé de préparation d'une solution de filage de cellulose en présence d'oxyde d'amine tertiaire et d'additif.**

Le dossier contient des informations techniques présentées postérieurement au dépôt de la demande et ne figurant pas dans le présent fascicule.

(30) Priorité : **01.07.87 FR 8709583**

(43) Date de publication de la demande :
**18.01.89 Bulletin 89/03**

(45) Mention de la délivrance du brevet :
**25.09.91 Bulletin 91/39**

(84) Etats contractants désignés :
**DE GB IT NL**

(56) Documents cités :
**BE-A- 868 737**
**DD-C- 158 656**
**DD-C- 218 104**
**FR-A- 2 578 865**
**US-A- 4 324 593**

(73) Titulaire : **INSTITUT TEXTILE DE FRANCE**
**35, rue des Abondances, B.P. 79**
**F-92105 Boulogne-Billancourt Cédex (FR)**
Titulaire : **CENTRE NATIONAL DE LA RECHERCHE SCIENTIFIQUE (CNRS)**
**15, Quai Anatole France**
**F-75700 Paris Cedex 07 (FR)**

(72) Inventeur : **Chanzy, Henri**
**37, rue du doyen Gosse**
**F-38700 La Tronche (FR)**
Inventeur : **Paillet, Michel**
**20, place des géants**
**F-38100 Grenoble (FR)**

(74) Mandataire : **Bertrand, Didier et al**
**Cabinet Beau de Loménie 55, rue d'Amsterdam**
**F-75008 Paris (FR)**

## Description

La présente invention concerne la préparation d'une solution de cellulose destinée à être extrudée ou filée, cette solution contenant comme solvant de la cellulose un oxyde d'amine tertiaire ; elle concerne également le procédé de filage de la solution ainsi préparée ainsi que les fibres et filaments cellulosiques obtenus.

L'utilisation d'oxyde d'amine tertiaire pour dissoudre de la cellulose en vue de réaliser une solution d'extrusion ou de filage est connue, par exemple par les brevets des Etats-Unis d'Amérique USP 2,179,181 et 3,447,939. En particulier ce dernier document décrit l'utilisation comme solvant de la cellulose du N-oxyde de N-méthylmorpholine, désigné dans la suite de la présente description par NMMO.

A la connaissance des demandeurs, les fils de cellulose régénérée obtenus par filage à partir de solutions dans les oxydes d'amine tels que le NMMO présentent des propriétés mécaniques supérieures à celles des celluloses régénérées conventionnelles, mais largement inférieures à celles des fibres à haute performance actuellement sur le marché. Par ailleurs le filage étant réalisé alors que la solution de cellulose est à température relativement élevée, ceci peut entraîner une dégradation partielle de la cellulose et donc des propriétés mécaniques des fils obtenus.

Or on a trouvé et c'est ce qui fait l'objet de l'invention un procédé de préparation d'une solution de cellulose à partir d'oxyde d'amine tertiaire qui pallie les inconvénients constatés. D'une part dans les conditions habituelles de filage, les fils obtenus présentent des propriétés mécaniques améliorées et d'autre part il est possible de filer à des températures plus basses. Selon le procédé de l'invention, on ajoute au mélange d'oxyde d'amine tertiaire et de cellulose comme additif du chlorure d'ammonium ou du chlorure de calcium.

Ainsi de façon tout-à-fait inattendue on a constaté que l'addition soit du chlorure d'ammonium soit du chlorure de calcium dans la solution de cellulose/oxyde d'amine tertiaire augmentait sensiblement le module d'Young, la ténacité et/ou l'allongement à la rupture des fils obtenus, comparativement aux mêmes caractéristiques des fils obtenus à partir des solutions de cellulose sans additifs.

L'augmentation des propriétés mécaniques observée est fonction du degré de polymérisation (DP) de la cellulose mise en oeuvre dans la solution, de sa concentration et de la concentration en additif.

Préférentiellement pour une cellulose de DP 5000 la quantité pondérale de chlorure d'ammonium dans la solution est supérieure à 1,5 fois la quantité de cellulose. Pour le chlorure de calcium cette quantité est égale ou supérieure à 0,5 fois et de préférence 1 fois la quantité de cellulose.

Préférentiellement pour une cellulose de DP 600, la quantité pondérale de chlorure d'ammonium dans la solution est comprise entre 10 et 250% de la quantité de cellulose.

De façon également inattendue on a constaté que l'addition soit du chlorure d'ammonium soit du chlorure de calcium dans la solution de cellulose/oxyde d'amine tertiaire permettait de diminuer sensiblement la température de la solution lors du filage. La diminution de température ainsi constatée a été de plusieurs dizaines de degrés par rapport aux températures les plus basses admissibles pour le filage des solutions sans additif.

Un autre aspect particulier de l'invention réside dans l'évolution de la solubilité de la cellulose dans le solvant, compte-tenu de la présence de l'additif. Cette solubilité diminue, mais par contre la viscosité de la solution augmente, ce qui permet de filer dans de bonnes conditions des solutions de cellulose présentant des concentrations faibles en cellulose. Ainsi c'est un autre objet de l'invention que de proposer un procédé de filage d'une solution de cellulose dans un oxyde d'amine tertiaire qui se caractérise par le fait que la solution a une concentration en cellulose comprise entre 2 et 10% et une concentration en chlorure d'ammonium ou en chlorure de calcium comprise entre respectivement 12 et 2%.

L'invention sera mieux comprise à la lecture de la description qui va être faite d'exemples de réalisation de solution de cellulose dans un oxyde d'amine tertiaire avec comme additif le chlorure d'ammonium ou le chlorure de calcium. On part d'une cellulose pure, obtenue à partir de Coton MENOUFI, ayant un degré de polymérisation de 5000.

Pour la préparation de la solution, on mélange de l'oxyde de N méthyl morpholine (NMMO) contenant 40% d'eau provenant de la firme TEXACO, à la quantité de cellulose, en y ajoutant comme antioxydant du N propyl gallate et comme additif du chlorure d'ammonium ou du chlorure de calcium. On met la suspension obtenue dans un Rotavapor BÜCHI dans lequel est réalisé un vide de 1,333 kPa (10 mm de mercure). On chauffe à 100°C pendant 7 minutes, puis on casse le vide et on porte la solution à 130°C pendant 5 minutes.

Le filage de la solution ainsi préparée s'effectue à l'aide d'un appareil de la firme DAVENPORT équipé d'un cylindre chauffant, d'un piston de 1 centimètre carré et de filières à trou unique dont le diamètre peut varier de 300 µm à 500 µm. Le filage a lieu à des températures variables qui peuvent aller de la température ambiante à 130°C. Il s'effectue dans l'air. La solution de filage, appelée aussi collodion, est entraînée vers un bac de coagulation rempli d'eau, avec ou sans adjuvant. La distance entre la filière et le bac de coagulation est de 10 à 15 centimètres. La pression exercée sur le piston est de 2,7 kg/cm2 mais peut aller jusqu'à 50 kg/cm2 pour des solutions très visqueuses, en particulier lorsque le filage a lieu aux températures les plus basses. Le fil obtenu est tiré dans le bac de coagulation, il passe dans deux renvois puis est bobiné à des vitesses qui s'échelonnent entre 20 et 200 mètres par minute.

On élimine par lavage à l'eau courante tous les additifs, y compris l'antioxydant, puis on sèche les fils à l'air. La mesure des titres s'effectue de façon générale à l'aide d'un vibroscope de la Firme CENTRALP AUTOMATISME couplé à un fréquencemètre. Les mesures des caractéristiques mécaniques des fils, à savoir module d'Young, force à la rupture et allongement à la rupture sont effectuées à l'aide d'un appareil INSTRON.

Les exemples ci-dessous donnent les valeurs des caractéristiques mécaniques mesurées pour des fils provenant de différentes solutions de filage.

Exemple 1

L'additif utilisé est le chlorure de calcium. Le tableau 1 ci-dessous donne les valeurs de trois caractéristiques mécaniques : module d'Young (en GPA), la ténacité ou force à la rupture (en GPA) et l'allongement à la rupture (en %), pour différentes concentrations de chlorure de calcium dans la solution. La solution de filage est une solution de cellulose de DP 5000 dans le NMMO à raison de 2% de cellulose.

Tableau 1

| Cellulose DP 5000 | Module | Ténacité | Allongement |
|---|---|---|---|
| sans additif | 40 | 0,85 | 4,0 |
| $Ca\ Cl_2$  1 % | 45 | 0,85 | 3,5 |
| 2 % | 55 | 0,95 | 2,6 |
| 5 % | 45 | 1,0 | 4,0 |
| 7 % | 48 | 0,9 | 4,7 |

Exemple 2

L'additif utilisé est le chlorure d'ammonium. La solution de filage a la même composition que dans l'exemple 1. Les valeurs des caractéristiques mécaniques sont données dans le tableau 2.

Tableau 2

| Cellulose DP 5000 | Module | Ténacité | Allongement |
|---|---|---|---|
| sans additif | 40 | 0,85 | 4,0 |
| $NH_4Cl$ 1 % | 39 | 0,6 | 3,1 |
| 2 % | 37 | 0,7 | 4,5 |
| 3,5 % | 55 | 1,35 | 5,0 |
| 5 % | 53 | 1,20 | 5,4 |

L'amélioration des caractéristiques mécaniques n'est obtenue que pour des concentrations en chlorure d'ammonium supérieures à 3% environ.

Exemple 3

Contrairement aux deux exemples précédents on part d'une cellulose ayant un taux d'alpha-cellulose de 95% et un degré de polymérisation de 600. Cette cellulose se présente sous la forme d'une pâte référence V60 de la société BUCKEYE. La pâte est désintégrée à sec à l'aide d'un appareil équipé de tamis ayant des trous de 1 millimètre de diamètre. Les conditions de préparation de la solution et de filage sont les mêmes que ce qui a été décrit ci-dessus ; toutefois on fait varier les concentrations dans la solution de filage à la fois de cellulose et de chlorure d'ammonium. Le tableau 3 ci-dessous donne les valeurs des caractéristiques mécaniques obtenues.

Tableau 3

| Cellulose DP 600 | $NH_4Cl$ | Module | Ténacité | Allongement |
|---|---|---|---|---|
| 10 % | 0 | 21 | 0,5 | 16,5 |
| 14 % | 2 % | 36 | 1 | 12 |
| 10 % | 4 % | 36 | 0,8 | 7 |
| 4 % | 10 % | 31 | 0,7 | 5,8 |

On relève une très forte amélioration du module d'Young et de la ténacité, mais par contre une forte diminution de l'allongement à la rupture.

On constate que l'on peut, grâce à l'addition du chlorure d'ammonium, filer de manière tout-à-fait satisfaisante une solution de filage à très faible concentration en cellulose.

L'invention n'est pas limitée aux seuls exemples décrits ci-dessus, en particulier elle concerne tous les types de cellulose et non seulement les celluloses présentant un DP de 5000 ou de 600.

## Revendications

1. Procédé de préparation d'une solution de cellulose destinée à être extrudée ou filée, du type dans lequel on utilise comme solvant de la cellulose un oxyde d'amine tertiaire caractérisé en ce qu'on ajoute au mélange d'oxyde d'amine tertiaire et de cellulose du chlorure d'ammonium ou du chlorure de calcium.

2. Procédé selon la revendication 1 caractérisé en ce que, la cellulose ayant un degré de polymérisation de l'ordre de 5000, la quantité de chlorure d'ammonium est supérieure à 1,5 fois la quantité de cellulose.

3. Procédé selon la revendication 1 caractérisé en ce que, la cellulose ayant un degré de polymérisation de l'ordre de 5000, la quantité de chlorure de calcium est égale ou supérieure à 0,5 fois la quantité de cellulose, et de préférence égale à la quantité de cellulose.

4. Procédé selon la revendication 1 caractérisé en ce que, la cellulose ayant un degré de polymérisation de l'ordre de 600, la quantité de chlorure d'ammonium est comprise entre 0,10 et 2,5 fois la quantité de cellulose.

5. Procédé de filage d'une solution de cellulose dans un oxyde d'amine tertiaire caractérisé en ce que la concentration de la solution en cellulose est comprise entre 2 et 10% et la concentration en chlorure d'ammonium ou en chlorure de calcium est comprise entre 12 et 2%.

## Claims

1. Process for the preparation of a cellulose solution destined to be extruded or spun, of the type in which the solvent used for the cellulose is a tertiary amine oxide, characterized in that ammonium chloride or calcium chloride is added to the mixture of the tertiary amine oxide and cellulose.

2. Process according to claim 1, characterized in that for a cellulose having a degree of polymerization of the order of 5000, the amount of ammonium chloride is greater than 1.5 times the amount of cellulose.

3. Process according to claim 1, characterized in that for a cellulose having a degree of polymerization of the order of 5000, the amount of calcium chloride is equal to or greater than 0.5 times the amount of cellulose, and preferably is equal to the amount of cellulose.

4. Process according to claim 1, characterized in that for a cellulose having a degree of polymerization of the order of 600, the amount of ammonium chloride varies between 0.10 and 2.5 times the amount of cellulose.

5. Process for the spinning a cellulose solution in a tertiary amine oxide, characterized in that the cellulose concentration of the solution varies between 2 and 10% and the ammonium chloride or calcium chloride concentration varies between 12 and 2%.

## Patentansprüche

1. Verfahren zur Herstellung einer zum Extrudieren oder Spinnen bestimmten Celluloselösung des Typs, bei dem man als Lösungsmittel der Cellulose ein tertiäres Aminoxid verwendet, **dadurch gekennzeichnet**, daß man der Mischung von tertiärem Aminoxid und Cellulose Ammoniumchlorid oder Calciumchlorid zusetzt.

2. Verfahren nach dem Anspruch 1, dadurch gekennzeichnet, daß bei einem Polymerisationsgrad der Cellulose in der Größenordnung von 5000 die Ammoniumchloridmenge größer als die 1,5-fache Cellulosemenge ist.

3. Verfahren nach dem Anspruch 1, dadurch gekennzeichnet, daß bei einem Polymerisationsgrad der Cellulose in der Größenordnung von 5000 die Calciumchloridmenge gleich oder größer als die 0,5-fache Cellulosemenge und vorzugsweise gleich der Cellulosemenge ist.

4. Verfahren nach dem Anspruch 1, dadurch gekennzeichnet, daß bei einem Polymerisationsgrad der Cellulose in der Größenordnung von 600 die Ammoniumchloridmenge zwischen der 0,10- und 2,5-fachen Cellulosemenge ist.

5. Verfahren zum Spinnen einer Lösung von Cellulose in einem tertiären Aminoxid, dadurch gekennzeichnet, daß die Konzentration der Lösung an Cellulose zwischen 2 und 10% ist und die Konzentration an Ammoniumchlorid oder an Calciumchlorid zwischen 12 und 2% ist.